# EUROPEAN PATENT APPLICATION

(11) **EP 3 832 160 A1**
(43) Date of publication of application: **09.06.2021**
(21) Application number: 19843884.8
(22) Date of filing: 12.07.2019
(51) Int. Cl.: F16F 15/139, F16F 15/134

(54) **TORQUE DAMPER DEVICE**

(30) Priority: 01.08.2018 JP 2018145089
(71) Applicant: Kabushiki Kaisha F.C.C., Hamamatsu-shi, Shizuoka 431-1394 (JP)
(72) Inventor: FUJIWARA, Hiromi, Hamamatsu-shi, Shizuoka 431-1304 (JP); ASAI, Hiroshi, Hamamatsu-shi, Shizuoka 431-1304 (JP); NAGATA, Takumi, Hamamatsu-shi, Shizuoka 431-1304 (JP); SAKASHITA, Kazuki, Hamamatsu-shi, Shizuoka 431-1304 (JP); KAJITA, Naoki, Hamamatsu-shi, Shizuoka 431-1304 (JP)
(74) Representative: Zimmermann, Tankred Klaus
(86) International application number: PCT/JP2019/027774
(87) International publication number: WO 2020/026775

(57) **Abstract**

Provided is a torque damper device capable of setting high hysteresis in a wide range and improving assembling property and maintainability of a high friction material for generating the high hysteresis. A torque damper device 100 includes an output hub 104 and a flange 107 between a first input plate 101 and a second input plate 102 rotatably driven by a rotational driving force of an engine. The output hub 104 is formed in a cylindrical shape. The flange 107 is attached to a portion that projects radially outward of the output hub 104. Further, the output hub 104 is formed with a friction plate holder 106 on an outer peripheral surface thereof. The friction plate holder 106 is fitted to a plate-side fitting portion 111 a of a first friction plate 111, and is formed to have an axial length longer than a total thickness of the first friction plate 111 and a first intermediate plate 112.

## Description

### TECHNICAL FIELD

The present invention relates to a torque damper device that absorbs torque variation of an engine.

### BACKGROUND ART

Conventionally, in a self-propelled vehicle equipped with an engine, a torque damper device is provided on a power transmission path between the engine and a transmission. The torque damper device absorbs the torque variation of the engine by hysteresis torque generated between two rotating bodies that are in frictional contact with each other. For example, in PATENT LITERATURE 1 below, high friction materials are respectively arranged on both sides in an axial direction of a driven plate extending radially outward from a boss member to which a rotary shaft on the transmission side is connected. At the same time, low friction materials are respectively arranged outside the high friction materials via a slide member made of a resin material. A torque variation absorbing device (hereinafter, referred to as a "torque damper device") capable of generating low hysteresis and high hysteresis in this way is disclosed.

### CITATION LIST

### PATENT LITERATURE

### PATENT LITERATURE 1: JP-A-2016-142339

However, in the torque damper device described in PATENT LITERATURE 1, the high hysteresis is generated by two high friction materials provided on both sides of the driven plate. Thus, the high friction material cannot be disposed any more. Therefore, there is a problem that the high hysteresis generated is limited. Further, in the torque damper device described in PATENT LITERATURE 1, the two high friction materials are attached to two slide members which are different parts. Therefore, there are problems that assembly work is complicated and maintenance burden is heavy.

The present invention addresses the above problems. An object of the present invention is to provide a torque damper device capable of setting a wide range of high hysteresis and improving assembling property and maintainability of the high friction material for generating the high hysteresis.

### SUMMARY OF INVENTION

In order to achieve the object mentioned above, the present invention features: a first input plate that is formed in a flat plate annular shape and is rotatably driven by a driving force of an engine; a second input plate that is formed in a flat plate annular shape, disposed at a position facing the first input plate, and rotatably driven integrally with the first input plate; a cylindrical output hub that is disposed coaxially with the first input plate and the second input plate and is rotatably driven by a rotational driving force of the first input plate and the second input plate; a flange that is provided between the first input plate and the second input plate projecting radially outward from an outer peripheral surface of the output hub; an elastic transmitter that is provided between the first input plate and the second input plate, and the flange, and includes an elastic body that transmits the rotational driving force of the first input plate and the second input plate to the flange; a plurality of flat plate annular first friction plates that are provided radially outside the output hub and between the flange and the second input plate; a plurality of first intermediate plates that are rotatably driven integrally with the second input plate, formed in a flat plate annular shape, and arranged between the first friction plates; and a pressure body that is provided between the first input plate and the second input plate and brings the first friction plates and the first intermediate plates into close contact with each other between the flange and the second input plate, wherein the output hub comprises: a friction plate holder that is formed to have a length equal to or greater than a thickness of the first friction plates and the first intermediate plates that are overlapped with each other in an axial direction on an outer peripheral surface thereof, and is fitted with each of the first friction plates; and a hub-side fitting portion that is formed to project or be recessed radially in the axial direction on the friction plate holder, and the first friction plates each comprise a plate-side fitting portion, that is fitted to the hub-side fitting portion and is formed in a concave or convex shape, on an inner peripheral portion thereof.

According to the feature of the present invention configured as described above, the torque damper device is formed with the hub-side fitting portion that holds the first friction plates in a state in which the first friction plates are fitted to the outer peripheral surface of the output hub to which an input shaft is connected to regulate radial displacement, and to allow axial displacement while regulating circumferential displacement on the outer peripheral surface. Therefore, the number of first friction plates held in the hub-side fitting portion can be appropriately set. Therefore, a wide range of high hysteresis can be set. In this case, the torque damper device can hold the first friction plates simply by inserting the first friction plates into the hub-side fitting portion from the axial direction. Therefore, it is possible to improve the assembling property and the maintainability of the first friction plates for generating the high hysteresis.

The present invention also features: the hub-side fitting portion and the plate-side fitting portion being formed so that circumferential lengths at portions in which the fitting portions mesh with each other are different from each other; and a gap being formed that allows relative displacement in a circumferential direction of the output hub and the first friction plates.

According to another feature of the present invention configured as described above, in the torque damper device, the circumferential length of the hub-side fitting portion and the circumferential length of the plate-side fitting portion are different from each other. Then, a gap is formed so that both the fitting portions can be relatively displaced in the circumferential direction. Thus, the output hub and the first friction plates can be relatively displaced in the circumferential direction. Therefore, the high hysteresis can be generated according to a magnitude of the torque variation of the engine.

Another feature of the present invention is that in the torque damper device, the first friction plates are formed in the same shape as each other.

According to another feature of the present invention configured as described above, in the torque damper device, the first friction plates are formed in the same shape as each other. Therefore, it is possible to reduce work and economic burden when manufacturing the torque damper device.

Another feature of the present invention is that in the torque damper device, the first friction plates are configured to include a first friction plate in which the gap is formed to be different from that of another first friction plate.

According to another feature of the present invention configured as described above, the torque damper device is configured such that the first friction plates include the first friction plate in which the gap is formed to be different from that of another first friction plate. Therefore, a plurality of timings for generating the high hysteresis can be set. Therefore, it is possible to generate the high hysteresis for each finer variation with respect to the torque variation of the engine. That is, it is possible to generate multi-stage hysteresis.

The present invention also features the damper device further comprising: a plurality of flat plate annular second friction plates that are provided between the first input plate and the flange; and a second intermediate plate that is rotatably driven integrally with the first input plate, formed in a flat plate annular shape, and disposed adjacent to the second friction plate, wherein the pressure body is provided between the first input plate and the second intermediate plate, so that the second input plate is elastically displaced toward the flange via the first input plate, and the second friction plate is pressed against the flange via the second intermediate plate.

According to another feature of the present invention configured as described above, in the torque damper device, the second friction plate is always in frictional contact with the flange. Therefore, the hysteresis generated by the first friction plate can be increased. Further, in the torque damper device according to the present invention, the gap is formed at a fitting portion between the hub-side fitting portion and the plate-side fitting portion. Then, when the torque damper device is configured so that the hysteresis generated by the first friction plate is generated when the torque variation from the engine is equal to or larger than a predetermined magnitude, the hysteresis is generated even when the torque variates so low that the first friction plate does not generate the hysteresis. In this way, the torque variation can be suppressed.

The present invention also features the damper device, wherein: the output hub and the flange are configured as separate bodies from each other, and are connected to each other by a rivet penetrating the output hub and the flange, the rivet has a head projecting from the flange, and a plurality of the rivets are provided in a circumferential direction of the flange, and the second friction plate is fitted to the head.

According to another feature of the present invention configured as described above, in the torque damper device, the second friction plate is fitted to the head of the rivet that connects the output hub and the flange. Therefore, the number of parts of the torque damper device is small. In this way, it is possible to reduce the work and economic burden when manufacturing the torque damper device.

Another feature of the present invention is that in the torque damper device, the flange is formed with a lubricating fluid flow path made of a through-hole for allowing lubricating fluid to flow between both sides of the flange.

According to another feature of the present invention configured as described above, the torque damper device is formed with the lubricating fluid flow path made of the through-hole for allowing the lubricating fluid to flow between both sides in the axial direction of the flange. Therefore, flowability of a lubricating oil in the torque damper device is improved. In this way, cooling property, cleaning property, and lubricity can be improved.

Another feature of the present invention is that in the torque damper device, the lubricating fluid flow path is formed at a position facing the friction plate holder.

According to another feature of the present invention configured as described above, in the torque damper device, the lubricating fluid flow path is formed at the position facing the friction plate holder. Therefore, the lubricating oil can be positively guided to the friction plate holder. Therefore, the cooling property, the cleaning property, and the lubricity of the first friction plate and the first intermediate plate can be improved.

Another feature of the present invention is that in the torque damper device, the second friction plate is formed with a flow hole made of a through-hole at a position facing the lubricating fluid flow path.

According to another feature of the present invention configured as described above, in the torque damper device, the flow hole made of the through-hole is formed at the position facing the lubricating fluid flow path in the second friction plate. Therefore, it is possible to prevent a part or all of the lubricating fluid flow path from being closed by the second friction plate. Therefore, the flowability of the lubricating oil to the friction plate holder is ensured. In this way, the cooling property, the cleaning property, and the lubricity of the first friction plate and the first intermediate plate can be improved.

The present invention also features, wherein:
the output hub is formed with a lubricating oil supply path for supplying lubricating oil into the torque damper device, in an input shaft connected to transmit a rotational driving force of the output hub,
a wide width portion that opens radially inward is formed in a gap between at least one of the output hub and the flange, and the first input plate, and
a narrow width portion in which a width of the gap is reduced is formed radially outside the wide width portion.

According to another feature of the present invention configured as described above, in the torque damper device, the wide width portion that opens radially inward is formed in the gap between at least one of the output hub and the flange, and the first input plate. At the same time, the narrow width portion in which the width of the gap is reduced is formed radially outside the wide width portion. Therefore, a flow rate of the lubricating fluid supplied from the input shaft is increased in the narrow width portion. Since the lubricating fluid can be supplied to the second friction plate in this way, the cooling property, the cleaning property, and the lubricity can be improved. Further, when the lubricating fluid flow path is formed in the flange, the torque damper device can improve the cooling property, the cleaning property, and the lubricity of the first friction plate by the lubricating fluid.

### BRIEF DESCRIPTION OF DRAWINGS

Fig. 1 is a partially broken front view schematically illustrating a configuration of a torque damper device according to the present invention.
Fig. 2 is a cross-sectional view schematically illustrating the configuration of the torque damper device taken along a line 2-2 shown in Fig. 1.
Fig. 3 is a partially enlarged view illustrating details of the configuration in a broken line circle A shown in Fig. 2.
Fig. 4 is a partially enlarged view illustrating details of a meshing portion between a first friction plate and an output hub shown in Figs. 1 and 2 in a state in which they are not in mesh with each other.
Fig. 5 is a partially enlarged view illustrating a state in which both the first friction plate and the output hub shown in Fig. 4 are in mesh with each other.

### DESCRIPTION OF EMBODIMENTS

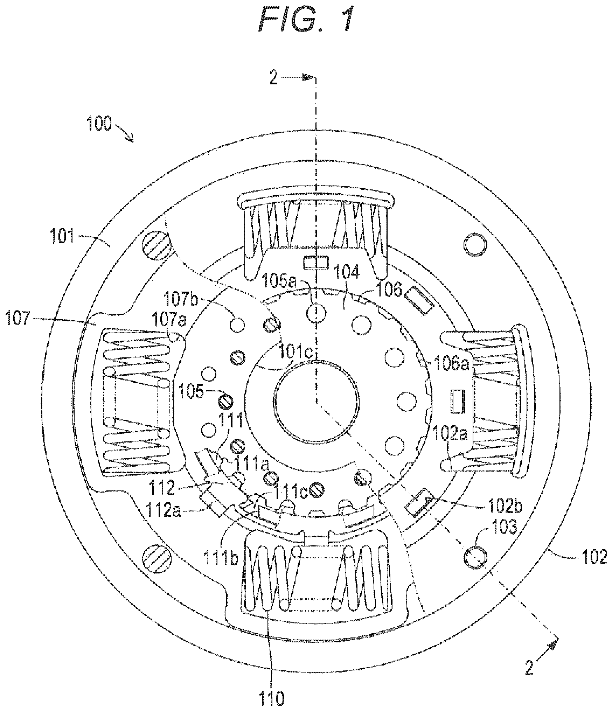

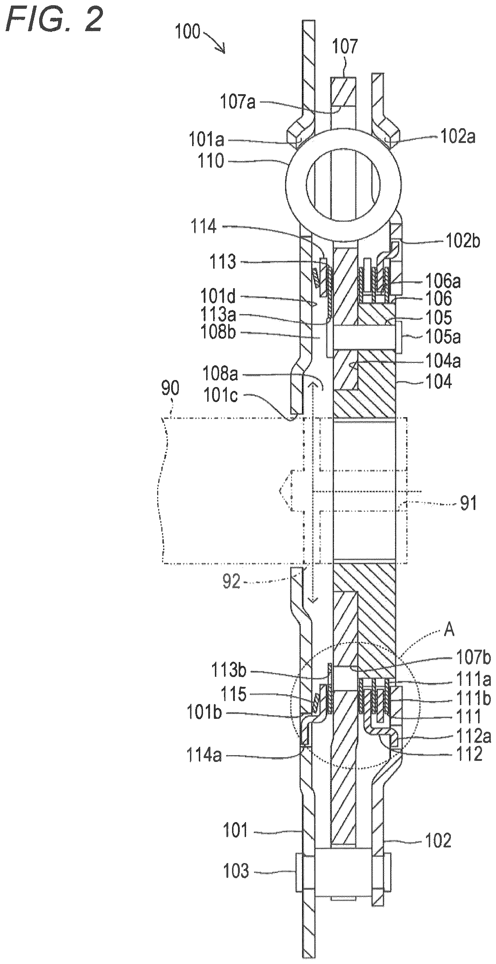

Hereinafter, an embodiment of a torque damper device according to the present invention will be described with reference to the drawings. Fig. 1 is a partially broken front view schematically illustrating a configuration of a torque damper device 100 according to the present invention. Further, Fig. 2 is a cross-sectional view schematically illustrating the configuration of the torque damper device 100 taken along a line 2-2 shown in Fig. 1. The torque damper device 100 is provided between an engine and a transmission mainly in an automobile (so-called AT vehicle) equipped with an automatic transmission. The torque damper device 100 is a mechanical device that reduces torque variation in a driving force of the engine and transmits the driving force to the transmission.

### (Configuration of torque damper device 100)

The torque damper device 100 includes a first input plate 101 and a second input plate 102. The first input plate 101 and the second input plate 102 are components that are rotationally driven by the driving force from the vehicle engine (not shown). Each of these plates is made of a metal material formed in a flat plate annular shape. The first input plate 101 and the second input plate 102 are arranged to face each other with a gap between them. The first input plate 101 and the second input plate 102 are integrally connected by a plurality of (four in this embodiment) rivets 103. Further, the first input plate 101 and the second input plate 102 are respectively formed with a plurality of (four in this embodiment) through-hole-shaped transmitter housings 101a and 102a at positions facing each other at equal intervals in a circumferential direction thereof. The transmitter housings 101a and 102a hold an elastic transmitter 110 described below.

The first input plate 101 constitutes one side surface (left side in the drawing) of both side surfaces of the torque damper device 100. A second intermediate plate 114, which will be described below, is held in plate holding holes 101b made of four through-holes formed at equal intervals in the circumferential direction. Further, the first input plate 101 is disposed to face a flange 107 at a position separated from a left end surface shown in the drawing of the flange 107 described below. At the same time, the first input plate 101 is formed so that its inner peripheral edge portion 101c bends in a direction away from the left end surface (left direction in Fig. 2). Thus, a wide width portion 108a is formed between the inner peripheral edge portion 101c and the flange 107. At the same time, a narrow width portion 108b is formed between a facing portion 101d and the flange 107, on an outer side of the inner peripheral edge portion 101c.

The second input plate 102 constitutes the other side surface (right side in the drawing) of both the side surfaces of the torque damper device 100. Two first intermediate plates 112, which will be described below, are held in plate holding holes 102b made of eight through-holes formed at equal intervals in the circumferential direction. The first input plate 101 and the second input plate 102 are arranged to face each other via the flange 107 extending from an output hub 104. The first input plate 101 and the second input plate 102 are integrally connected by the plurality of (four in this embodiment) rivets 103. Then, the first input plate 101 and the second input plate 102 are connected to an output shaft (not shown) such as a crankshaft of the engine. Then, the first input plate 101 and the second input plate 102 are integrally rotationally driven.

The output hub 104 is a component for outputting a rotational driving force, that has been input from the engine to the first input plate 101 and the second input plate 102, to the outside. The output hub 104 is made of a metal material formed in a cylindrical shape. In this case, a through-hole at a center of the output hub 104 is a portion to which an input shaft 90 extending from the transmission, which is an output destination of the rotational driving force of the torque damper device 100, is connected. A spline for transmitting the rotational driving force is formed on an inner peripheral surface of the cylindrical body. On the other hand, an outer peripheral portion of the output hub 104 is a portion that holds the flange 107, a first friction plate 111, and a second friction plate 113. A cutout 104a and a friction plate holder 106 are formed in the outer peripheral portion of the output hub 104.

The cutout 104a is a portion to which the flange 107 is connected. A part of a tip portion radially outside the output hub 104 is cut out in an annular shape in a thickness direction. In this case, the output hub 104 is formed with a plurality of through-holes in the circumferential direction in a portion corresponding to the cutout 104a at the tip portion. The flange 107 is connected by a rivet 105, that penetrates each of the through-holes and the flange 107 in an axial direction thereof. In this embodiment, the flange 107 is connected to the output hub 104 by twelve rivets 105.

The rivet 105 is a component for integrally connecting the flange 107 to the output hub 104. The rivet 105 is made of a metal rod having heads 105a projecting radially outward at both ends thereof. That is, the rivet 105 connects the flange 107 and the output hub 104 to each other with the heads 105a respectively projecting from outer side surfaces of the flange 107 and the output hub 104. In this case, the head 105a projecting from the side surface of the flange 107 is formed to have a projecting amount that can be supported by fitting to an inner peripheral portion 113a of the second friction plate 113 described below. Specifically, the head 105a is formed to have a thickness greater than that of the second friction plate 113.

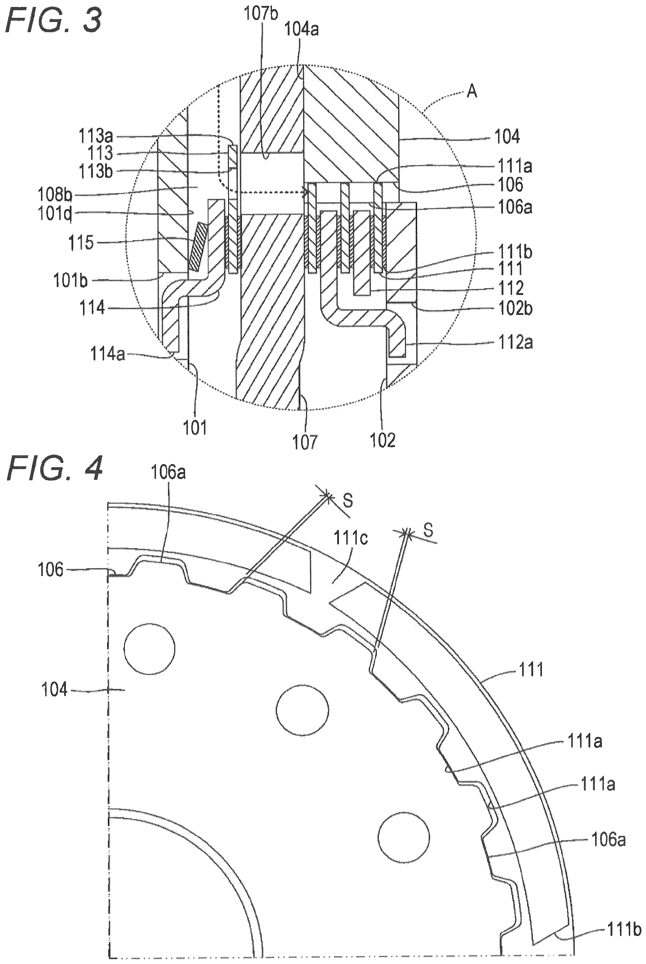

As illustrated in Fig. 3, the friction plate holder 106 is a portion that holds the first friction plate 111. The friction plate holder 106 is formed to extend in the axial direction at the tip portion radially outside the output hub 104. In this case, in the friction plate holder 106, a spline-shaped hub-side fitting portion 106a is formed at the tip portion radially outside the output hub 104. The hub-side fitting portion 106a is configured to fit into a plate-side fitting portion 111a formed on an inner peripheral portion of the first friction plate 111.

The friction plate holder 106 is formed to have an axial length longer than the total thickness of the first friction plates 111 and the first intermediate plates 112 which are overlapped with each other in the axial direction. In this embodiment, the axial length of the friction plate holder 106 is longer than the sum of the thicknesses of three first friction plates 111 and the thicknesses of the two first intermediate plates 112.

The flange 107 is a component for transmitting the rotational driving force, that has been input from the engine to the first input plate 101 and the second input plate 102, to the output hub 104. The flange 107 is made of a metal material formed in a flat plate annular shape. The flange 107 is disposed between the first input plate 101 and the second input plate 102. Transmitter housings 107a for housing the elastic transmitter 110 are formed at positions facing the transmitter housings 101a and 102a. In this case, a portion between the transmitter housings 107a in an outer peripheral portion of the flange 107 is formed to be recessed radially inward. Thus, the transmitter housings 107a are formed not to physically interfere with the rivets 103.

In the flange 107, a lubricating fluid flow path 107b is formed at a position facing the friction plate holder 106 in the output hub 104. The lubricating fluid flow path 107b is a through-hole for guiding the lubricating fluid (not shown) flowing from radially inside the narrow width portion 108b to the friction plate holder 106 side. A plurality of the lubricating fluid flow paths 107b are formed at equal intervals in the circumferential direction. In this embodiment, twelve lubricating fluid flow paths 107b are formed. That is, the torque damper device 100 in this embodiment is a wet type torque damper device.

The flange 107 is formed to have a thickness that fits in the cutout 104a to be flush with an end surface on the first input plate 101 side in the output hub 104. Thus, the wide width portion 108a and the narrow width portion 108b are formed between the end surface on the first input plate 101 side in the flange 107 and the first input plate 101.

The wide width portion 108a is a portion that receives the lubricating fluid discharged from the input shaft 90. The wide width portion 108a is a flow path formed in an annular shape between the inner peripheral edge portion 101c of the first input plate 101 and the side surface of the output hub 104. The wide width portion 108a is formed to face a plurality of discharge ports 92 formed open on an outer peripheral surface of the input shaft 90. Note that in Figs. 2 and 3, a flow of the lubricating fluid guided from the input shaft 90 into the torque damper device 100 is shown by a broken line.

The narrow width portion 108b is a portion that guides the lubricating fluid that has flowed into the wide width portion 108a to the second friction plate 113 and the lubricating fluid flow path 107b. The narrow width portion 108b is formed in an annular shape with a width narrower than that of the wide width portion 108a between the facing portion 101d of the first input plate 101 and the side surface of the flange 107. Thus, the narrow width portion 108b can increase the flow rate of the lubricating fluid flowing from the wide width portion 108a to improve cooling property, cleaning property, and lubricity of the second friction plate 113. At the same time, flowability of the lubricating fluid to the first friction plate 111 via the lubricating fluid flow path 107b can be improved.

Note that the narrow width portion 108b only needs to be formed to have a width narrower than that of the wide width portion 108a. Therefore, the narrow width portion 108b may be formed by projecting one of end surfaces facing each other of the facing portion 101d and the flange 107 to the other side. Therefore, the narrow width portion 108b can also be formed by projecting at least a part of the end surface of the flange 107 to the facing portion 101d side. Further, even if the wide width portion 108a and the narrow width portion 108b have a uniform width radially outwardly, that is, even if the wide width portion 108a or the narrow width portion 108b is omitted, the lubricating fluid flow itself is secured.

The elastic transmitter 110 is a component for elastically transmitting the rotational driving force, that has been input from the engine to the first input plate 101 and the second input plate 102, to the output hub 104. The elastic transmitter 110 is made of a metal coil spring. The elastic transmitter 110 is fitted into the transmitter housings 101a, 102a, and 107a formed at positions facing each other in the first input plate 101, the second input plate 102, and the flange 107, in a compressed and deformed state.

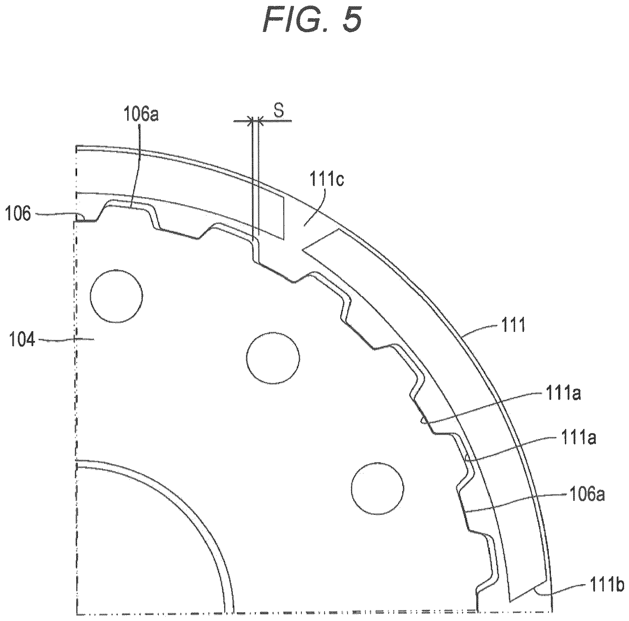

The first friction plate 111 is a flat plate annular component pressed against the second input plate 102, the flange 107, and the first intermediate plate 112. The first friction plate 111 is formed of a thin plate material made of an SPCC (cold rolled steel plate) material punched in an annular shape. The plate-side fitting portion 111a formed of an internal gear-like spline that spline fits into the hub-side fitting portion 106a formed in the output hub 104 is formed in the inner peripheral portion of the first friction plate 111. In this case, as illustrated in Figs. 4 and 5, the plate-side fitting portion 111a and the hub-side fitting portion 106a are formed such that a circumferential length of a concave tooth side of a spline teeth that mesh with each other is longer than that of a convex tooth side. In this way, a gap S is formed in which the plate-side fitting portion 111a and the hub-side fitting portion 106a can be relatively displaced in the circumferential direction.

Friction materials 111b made of a plurality of pieces of paper are attached to both side surfaces in the axial direction of the first friction plate 111. At the same time, a groove 111c that serves as a flow path for the lubricating fluid is formed between the friction materials. The first friction plates 111 are provided alternately with the first intermediate plates 112 in the axial direction on the friction plate holder 106. In this embodiment, the three first friction plates 111 are provided on the friction plate holder 106. In this case, two first friction plates 111 provided at both ends in the axial direction are provided respectively facing a side surface of one (right side in the drawing) of both ends in the axial direction of the flange 107, and an inner side surface facing the flange 107 in the second input plate 102.

The first intermediate plate 112 is a flat plate annular component pressed against the first friction plate 111. The first intermediate plate 112 is formed by punching a thin plate material made of SPCC (cold rolled steel plate) material in an annular shape. In this case, the first intermediate plate 112 is formed with a plate-like hooking portion 112a that is bent and projects radially outward, in an outer peripheral portion thereof. The first intermediate plate 112 is hooked into the plate holding holes 102b of the second input plate 102. In this embodiment, four hooking portions 112a are formed at equal intervals in the circumferential direction on the outer peripheral portions of the first intermediate plates 112.

The first intermediate plates 112 are provided alternately with the first friction plates 111 in the axial direction on the friction plate holder 106. In this embodiment, the two first intermediate plates 112 are provided on the friction plate holder 106. That is, the second input plate 102 integrally holds the two first intermediate plates 112 via eight plate holding holes 102b.

The second friction plate 113 is a flat plate annular component pressed against the flange 107 and the second intermediate plate 114. The second friction plate 113 is formed by punching a thin plate material made of SPCC (cold rolled steel plate) material in an annular shape. The second friction plate 113 is held by the inner peripheral portion 113a being fitted to radially outer edges of the heads 105a of the twelve rivets 105 described above. Further, similarly to the first friction plate 111, the friction materials made of the pieces of paper are attached to both side surfaces in the axial direction of the second friction plate 113. At the same time, a groove is formed between the friction materials.

Further, in the second friction plate 113, a flow hole 113b is formed at a position facing the lubricating fluid flow path 107b of the flange 107. The flow hole 113b is a through-hole for guiding the lubricating fluid present in a region (in this embodiment, the narrow width portion 108b) between the first input plate 101 and the flange 107 to the lubricating fluid flow path 107b. A plurality of the flow holes 113b are formed at equal intervals in the circumferential direction of the second friction plate 113. In this embodiment, eight flow holes 113b are formed radially inside the friction material. The second friction plate 113 is provided radially outside the heads 105a of the twelve rivets 105 so as to face a side surface of the other (left side in the drawing) of both ends in the axial direction of the flange 107.

The second intermediate plate 114 is a flat plate annular component pressed against the second friction plate 113. The second intermediate plate 114 is formed by punching a thin plate material made of SPCC (cold rolled steel plate) material in an annular shape. In this case, similarly to the first intermediate plate 112, the second intermediate plate 114 is formed with a plate-like hooking portion 114a that is bent and projects radially outward, in an outer peripheral portion thereof. The plate-like hooking portion 114a is hooked on the plate holding holes 101b of the first input plate 101. In this embodiment, four hooking portions 114a are formed at equal intervals in the circumferential direction in an outer peripheral portion of the second intermediate plate 114.

That is, the first input plate 101 integrally holds one second intermediate plate 114 via four plate holding holes 101b. In this case, the second intermediate plate 114 is provided at a position radially outside a portion facing the facing portion 101d of the first input plate 101. Further, a pressure body 115 is provided between the first input plate 101 and the second intermediate plate 114.

The pressure body 115 presses the second intermediate plate 114. Thus, the second friction plate 113 is pressed against the flange 107. At the same time, the first input plate 101 is pressed outward. In this way, the pressure body 115 is a component made of an elastic body for pressing the second input plate 102 against the first intermediate plate 112 and the first friction plate 111 against the flange 107. Specifically, in this embodiment, the pressure body 115 is made of a flat plate ringshaped spring steel formed in a weight shape. The pressure body 115 is provided at a position facing the facing portion 101d of the first input plate 101.

### (Assembly of torque damper device)

Next, assembly work in a manufacturing process of the torque damper device 100 configured as described above will be described. First, the operator prepares the output hub 104 and the flange 107. Thereafter, the operator integrally attaches the flange 107 to the cutout 104a of the output hub 104 via the rivets 105.

Subsequently, the operator prepares the first friction plates 111 and the first intermediate plates 112. Thereafter, the operator fits the first friction plates 111 to the friction plate holder 106 of the output hub 104. In this case, the operator fits the plate-side fitting portion 111a of the first friction plates 111 to the hub-side fitting portion 106a while alternately stacking the first friction plates 111 and the first intermediate plates 112 in order from the flange 107 side.

In this case, the flange 107 provided at one end (left side in the drawing) of the friction plate holder 106 receives the first friction plates 111. Therefore, the operator can easily arrange the first friction plates 111 and the first intermediate plates 112 on the friction plate holder 106 while alternately stacking them in a state of defining an axial position. Further, radial positions of the first friction plates 111 are defined by fitting the first friction plates 111 to the hub-side fitting portion 106a. At the same time, radial positions of the first intermediate plates 112 are loosely defined via the gap by an outer peripheral surface of the hub-side fitting portion 106a. Therefore, the operator can easily arrange the first friction plates 111 and the first intermediate plates 112 on the friction plate holder 106 while alternately stacking them in a state of defining the radial position.

Subsequently, the operator prepares the second friction plate 113 and the second intermediate plate 114. Thereafter, the operator places the second friction plate 113 adjacent to the side surface of the flange 107. At the same time, the operator places the second intermediate plate 114 adjacent to the second friction plate 113. In this case, a radial position of the second friction plate 113 is defined by fitting the inner peripheral portion 113a to the head 105a of the rivets 105. Therefore, the second friction plate 113 can be disposed by being easily positioned with respect to the flange 107.

Subsequently, the operator assembles the prepared first input plate 101, the second input plate 102, the elastic transmitter 110, and the pressure body 115 to the flange 107. Specifically, the operator places the elastic transmitter 110 inside four transmitter housings 107a of the flange 107. Thereafter, the operator places the second input plate 102 so as to sandwich the first friction plates 111, which are arranged to face the first intermediate plates 112 and are alternately overlapped with each other, and the first intermediate plates 112, with the flange 107. In this case, the operator places the elastic transmitter 110 in the transmitter housings 102a of the second input plate 102. At the same time, the operator hooks the hooking portions 112a of the first intermediate plates 112 into the plate holding holes 102b of the second input plate 102.

Subsequently, the operator places the first input plate 101 facing the second intermediate plate 114 via the pressure body 115 so as to sandwich the pressure body 115, the second intermediate plate 114, and the second friction plate 113 with the flange 107. In this case, the operator places the elastic transmitter 110 in the transmitter housings 101a of the first input plate 101. At the same time, the hooking portions 114a of the second intermediate plate 114 are hooked into the plate holding holes 101b of the first input plate 101.

Subsequently, the operator integrally connects the first input plate 101 and the second input plate 102 arranged on both sides in the axial direction of the flange 107 by the rivets 103. Thus, the operator can assemble the torque damper device 100. Note that various adjustment work and test work are required to complete the torque damper device 100. However, since the various works are not directly related to the present invention, a description thereof will be omitted. Note that at the time of disassembling the torque damper device 100 such as output adjustment or maintenance, the torque damper device 100 can be disassembled by a reverse procedure to the above-mentioned assembly procedure.

Then, the completed torque damper device 100 is assembled on a power transmission path between the engine and the transmission in an assembly process of the automobile. In this case, the torque damper device 100 is fitted to the input shaft 90 extending from the transmission, on the inner peripheral surface of the output hub 104. Here, a lubricating fluid supply path 91 for supplying the lubricating fluid into the torque damper device 100 is formed to extend in the axial direction in the input shaft 90. The lubricating fluid supply path 91 has openings at a plurality of positions in the outer peripheral surface of the input shaft 90. The discharge ports 92, which are the openings of the lubricating fluid supply path 91, are formed in the positions in the outer peripheral surface of the input shaft 90 so as to face the wide width portion 108a when the input shaft 90 is connected to the output hub 104. Note that as the lubricating fluid, oil or the like capable of ensuring the cooling property, the cleaning property, and the lubricity of the first friction plate 111 and the second friction plate 113 is mainly used.

### (Operation of torque damper device 100)

Next, an operation of the torque damper device 100 configured as described above will be described. The torque damper device 100 is disposed between the engine and the transmission in the automobile, absorbs the torque variation from the engine when the automobile is idling, and transmits the rotational driving force to the transmission. At the time of this idling, the vehicle is in a stopped state in which the vehicle is not running with the engine started.

Specifically, in the torque damper device 100, the first input plate 101 and the second input plate 102 are integrally rotationally driven by the rotational driving force from the engine. At the same time, the first intermediate plate 112 and the second intermediate plate 114 integrally connected to the first input plate 101 and the second input plate 102 are also integrally rotationally driven. In this case, the flange 107 and the output hub 104 are respectively elastically connected to the first input plate 101 and the second input plate 102 via the elastic transmitter 110. Therefore, they are rotationally driven together with the first input plate 101 and the second input plate 102.

The first friction plates 111 meshed with the output hub 104 via the friction plate holder 106 is in close contact with the first intermediate plate 112 by an elastic force of the pressure body 115. At the same time, the first friction plates 111 are also in close contact with the flange 107 and the second input plate 102. Thus, the first friction plates 111 rotationally drive the output hub 104.

The second friction plate 113 is in close contact with the second intermediate plate 114 by the elastic force of the pressure body 115. At the same time, the second friction plate 113 is also in close contact with the flange 107. Thus, the second friction plate 113 rotationally drives the output hub 104.

In such an idling state of the engine, when a small torque variation occurs in the rotational driving force from the engine, in the torque damper device 100, at least one of the first friction plate 111 and the second friction plate 113 which are in close contact with the flange 107 frictionally slides with at least one of the flange 107, the first intermediate plate 112, and the second intermediate plate 114. This generates low hysteresis. Thus, in the torque damper device 100, the low hysteresis is generated due to frictional sliding of at least one of the first friction plate 111 and the second friction plate 113 which are in close contact with the flange 107. The torque damper device 100 absorbs the small torque variation by the low hysteresis.

When a torque variation larger than the small torque variation occurs in the rotational driving force from the engine, the torque damper device 100 generates high hysteresis in addition to the low hysteresis. Specifically, in the torque damper device 100, as shown in Fig. 5, tooth surfaces where the hub-side fitting portion 106a of the output hub 104 and the plate-side fitting portion 111a of the first friction plates 111 mesh with each other are displaced to a side of tooth surfaces forming the gap S by the large torque variation. Thus, the high hysteresis is generated due to the frictional sliding that occurs between the first friction plates 111 and the first intermediate plates 112.

That is, in the torque damper device 100, the tooth surfaces where the hub-side fitting portion 106a of the output hub 104 and the plate-side fitting portion 111 a of the first friction plates 111 mesh with each other eliminate the gap S formed on an opposite side in the circumferential direction to the tooth surfaces. Then, the high hysteresis is not generated until the tooth surfaces forming the gap S mesh with each other. Thus, the torque damper device 100 absorbs part or all of the large torque variation by the high hysteresis generated by the first friction plate 111 frictionally sliding between the flange 107, the first intermediate plate 112, and the second input plate 102.

The lubricating fluid is supplied to the torque damper device 100 from the input shaft 90 when the engine is operating. The lubricating fluid discharged from the discharge ports 92 of the input shaft 90 is supplied to the second friction plate 113 via the wide width portion 108a formed of the first input plate 101 and the output hub 104, and the narrow width portion 108b formed of the first input plate 101 and the flange 107. At the same time, the lubricating fluid is supplied to the friction plate holder 106 and the first friction plates 111 respectively through the flow holes 113b formed in the second friction plate 113 and the lubricating fluid flow path 107b formed in the flange 107. Thus, the second friction plate 113 and the first friction plate 111 are cooled, washed, and lubricated.

As can be understood from the above operation description, according to the above embodiment, in the torque damper device 100, the first friction plates 111 are fitted to an outer peripheral surface of the output hub 104 to which the input shaft 90 is connected. This regulates the radial displacement. At the same time, the hub-side fitting portion 106a for holding the first friction plates 111 while regulating the circumferential displacement on the outer peripheral surface and allowing the axial displacement is formed in the torque damper device 100. Therefore, the number of the first friction plates 111 held by the hub-side fitting portion 106a can be appropriately set. This makes it possible to set the high hysteresis in a wide range. In this case, in the torque damper device 100, the first friction plates 111 can be held simply by inserting the first friction plates 111 into the hub-side fitting portion 106a from the axial direction. Therefore, assembling property and maintainability of the first friction plates 111 for generating the high hysteresis can be improved.

Further, embodiments of the present invention are not limited to the above embodiment. Various modifications can be made without departing from the object of the present invention. Note that in the description of the modifications, the same reference numerals are given to the same parts as those in the above embodiment.

For example, in the above embodiment, the torque damper device 100 includes the three first friction plates 111 and the two first intermediate plates 112. However, the torque damper device 100 only needs to include a plurality of first friction plates 111 and a plurality of first intermediate plates 112.

In the above embodiment, all the three first friction plates 111 have the same shape. Thus, work and economic burden when manufacturing the torque damper device 100 can be reduced. However, the first friction plates 111 may be configured to include a first friction plate 111 including the plate-side fitting portion 111a in which the gap S is formed to be different from that of another first friction plate 111. According to this, the torque damper device 100 can set a plurality of timings for generating the high hysteresis. Therefore, it is possible to generate the high hysteresis for every finer variation with respect to the torque variation of the engine. That is, the hysteresis can be generated in multiple stages.

In the above embodiment, the torque damper device 100 is configured so that the gap S is formed between the plate-side fitting portion 111a of the first friction plates 111 and the hub-side fitting portion 106a of the output hub 104. That is, the plate-side fitting portion 111a and the hub-side fitting portion 106a are formed so that the circumferential length of the concave tooth side of the spline teeth that mesh with each other is longer than that of the convex tooth side. Then, the gap S is formed so that the plate-side fitting portion 111a and the hub-side fitting portion 106a can be relatively displaced in the circumferential direction. However, the plate-side fitting portion 111a and the hub-side fitting portion 106a may be formed so that the circumferential length of the concave tooth side of the spline teeth that mesh with each other is substantially equal to that of the convex tooth side. In this case, the plate-side fitting portion 111a and the hub-side fitting portion 106a may be formed to be fitted with each other in a state in which they cannot be relatively displaced in the circumferential direction. According to this, the torque damper device 100 can immediately generate the high hysteresis with respect to the torque variation from the engine.

In the above embodiment, the torque damper device 100 is configured to include the second friction plate 113 and the second intermediate plate 114. Thus, the torque damper device 100 can increase the hysteresis generated by the first friction plates 111. Further, the torque damper device 100 generates the hysteresis even when the torque variates so low that the first friction plates 111 do not generate the hysteresis. In this way, the torque variation can be suppressed. However, the torque damper device 100 can be configured by omitting the second friction plate 113 and the second intermediate plate 114. In this case, in the torque damper device 100, the pressure body 115 may be provided between the second input plate 102 and the flange 107. Alternatively, the pressure body 115 may also be provided between the first input plate 101 and the flange 107.

For example, in the torque damper device 100, the pressure body 115 can be provided between the first intermediate plate 112 provided between the flange 107 and the first friction plate 111, and the flange 107. Further, for example, in the torque damper device 100, the first intermediate plate 112 can be provided between the second input plate 102 and the first friction plate 111. In this case, the pressure body 115 can be provided between the first intermediate plate 112 and the second input plate 102. Further, for example, in the torque damper device 100, the two first intermediate plates 112 can be provided between the two first friction plates 111. In this case, the pressure body 115 can be provided between the two first intermediate plates 112. For example, in the torque damper device 100, the second intermediate plate 114 can be provided between the flange 107 and the first input plate 101. In this case, the pressure body 115 can be provided between the first input plate 101 and the second intermediate plate 114.

In the above embodiment, in the torque damper device 100, the output hub 104 and the flange 107 are configured as separate bodies from each other. Then, the output hub 104 and the flange 107 are connected by the rivets 105. However, the output hub 104 and the flange 107 can also be configured as an integral part. In this case, the second friction plate 113 may be preferably provided with a protrusion projecting in a convex shape so that all or part of the inner peripheral portion 113a of the second friction plate 113 fits on the side surface of the output hub 104 integrally formed with the flange 107.

In the above embodiment, the flange 107 is configured so that the lubricating fluid flow path 107b is formed at the position facing the friction plate holder 106. However, in the flange 107, the lubricating fluid flow path 107b can also be formed at a position deviated from the friction plate holder 106, for example, radially outside the friction plate holder 106. Further, the flange 107 can be configured by omitting the lubricating fluid flow path 107b. In this case, the second friction plate 113 can be configured by omitting the flow hole 113b.

In the above embodiment, the hub-side fitting portion 106a and the plate-side fitting portion 111a include a large number of spline teeth. However, the hub-side fitting portion 106a and the plate-side fitting portion 111a only need to be configured to include at least one concave and convex portions that mesh with each other.

### LIST OF REFERENCE SIGNS

S: Gap between plate-side fitting portion of first friction plate and hub-side fitting portion of output hub, 90: Input shaft, 91: Lubricating fluid supply path, 92: Discharge port, 100: Torque damper device, 101: First input plate, 101a: Transmitter housing, 101b: Plate holding hole, 101c: Inner peripheral edge portion, 101d: Facing portion, 102: Second input plate, 102a: Transmitter housing, 102b: Plate holding hole, 103: Rivet, 104: Output hub, 104a: Cutout, 105: Rivet, 105a: Head, 106: Friction plate holder, 106a: Hub-side fitting portion, 107: Flange, 107a: Transmitter housing, 107b: Lubricating fluid flow path, 108a: Wide width portion, 108b: Narrow width portion, 110: Elastic transmitter, 111: First friction plate, 111a: Plate-side fitting portion, 111b: Friction material, 111c: Groove, 112: First intermediate plate, 112a: Hooking portion, 113: Second friction plate, 113a: Inner peripheral portion, 113b: Flow hole, 114: Second intermediate plate, 114a: Hooking portion, 115: Pressure body.

## Claims

1. A torque damper device comprising:
a first input plate that is formed in a flat plate annular shape and is rotatably driven by a driving force of an engine;
a second input plate that is formed in a flat plate annular shape, disposed at a position facing the first input plate, and rotatably driven integrally with the first input plate;
a cylindrical output hub that is disposed coaxially with the first input plate and the second input plate and is rotatably driven by a rotational driving force of the first input plate and the second input plate;
a flange that is provided between the first input plate and the second input plate projecting radially outward from an outer peripheral surface of the output hub;
an elastic transmitter that is provided between the first input plate and the second input plate, and the flange, and includes an elastic body that transmits the rotational driving force of the first input plate and the second input plate to the flange;
a plurality of flat plate annular first friction plates that are provided radially outside the output hub and between the flange and the second input plate;
a plurality of first intermediate plates that are rotatably driven integrally with the second input plate, formed in a flat plate annular shape, and arranged between the first friction plates; and
a pressure body that is provided between the first input plate and the second input plate and brings the first friction plates and the first intermediate plates into close contact with each other between the flange and the second input plate, wherein
the output hub comprises:
a friction plate holder that is formed to have a length equal to or greater than a thickness of the first friction plates and the first intermediate plates that are overlapped with each other in an axial direction on an outer peripheral surface thereof, and is fitted with each of the first friction plates; and
a hub-side fitting portion that is formed to project or be recessed radially in the axial direction on the friction plate holder, and
the first friction plates each comprise a plate-side fitting portion, that is fitted to the hub-side fitting portion and is formed in a concave or convex shape, on an inner peripheral portion thereof.

2. The torque damper device according to claim 1, wherein the hub-side fitting portion and the plate-side fitting portion are formed so that circumferential lengths at portions in which the fitting portions mesh with each other are different from each other, and a gap is formed that allows relative displacement in a circumferential direction of the output hub and the first friction plates.

3. The torque damper device according to claim 2, wherein the first friction plates are formed in the same shape as each other.

4. The torque damper device according to claim 2, wherein the first friction plates are configured to include a first friction plate including the plate-side fitting portion formed to have the gap different from that of another first friction plate.

5. The torque damper device according to any one of claims 1 to 4, further comprising:
a plurality of flat plate annular second friction plates that are provided between the first input plate and the flange; and
a second intermediate plate that is rotatably driven integrally with the first input plate, formed in a flat plate annular shape, and disposed adjacent to the second friction plate, wherein
the pressure body is provided between the first input plate and the second intermediate plate, so that the second input plate is elastically displaced toward the flange via the first input plate, and the second friction plate is pressed against the flange via the second intermediate plate.

6. The torque damper device according to claim 5, wherein
the output hub and the flange are configured as separate bodies from each other, and are connected to each other by a rivet penetrating the output hub and the flange,
the rivet has a head projecting from the flange, and a plurality of the rivets are provided in a circumferential direction of the flange, and
the second friction plate is fitted to the head.

7. The torque damper device according to claim 5 or 6, wherein the flange is formed with a lubricating fluid flow path made of a through-hole for allowing lubricating fluid to flow between both sides of the flange.

8. The torque damper device according to claim 7, wherein the lubricating fluid flow path is formed at a position facing the friction plate holder.

9. The torque damper device according to claim 7 or 8, wherein the second friction plate is formed with a flow hole made of a through-hole at a position facing the lubricating fluid flow path.

10. The torque damper device according to any one of claims 5 to 9, wherein
in the output hub, a lubricating oil supply path for supplying lubricating oil into the torque damper device is formed in an input shaft connected to transmit a rotational driving force of the output hub,
a wide width portion that opens radially inward is formed in a gap between at least one of the output hub and the flange, and the first input plate, and
a narrow width portion in which a width of the gap is reduced is formed radially outside the wide width portion.

## Amended claims

### Amended claims under Art. 19.1 PCT

1. A torque damper device comprising:
a first input plate that is formed in a flat plate annular shape and is rotatably driven by a driving force of an engine;
a second input plate that is formed in a flat plate annular shape, disposed at a position facing the first input plate, and rotatably driven integrally with the first input plate;
a cylindrical output hub that is disposed coaxially with the first input plate and the second input plate and is rotatably driven by a rotational driving force of the first input plate and the second input plate;
a flange that is provided between the first input plate and the second input plate projecting radially outward from an outer peripheral surface of the output hub;
an elastic transmitter that is provided between the first input plate and the second input plate, and the flange, and includes an elastic body that transmits the rotational driving force of the first input plate and the second input plate to the flange;
a plurality of flat plate annular first friction plates that are provided radially outside the output hub and between the flange and the second input plate;
a plurality of first intermediate plates that are rotatably driven integrally with the second input plate, formed in a flat plate annular shape, and arranged between the first friction plates; and
a pressure body that is provided between the first input plate and the second input plate and brings the first friction plates and the first intermediate plates into close contact with each other between the flange and the second input plate, wherein
the output hub comprises:
a friction plate holder that is formed to have a length equal to or greater than a thickness of the first friction plates and the first intermediate plates that are overlapped with each other in an axial direction on an outer peripheral surface thereof, and is fitted with each of the first friction plates; and
a hub-side fitting portion that is formed to project or be recessed radially in the axial direction on the friction plate holder, and
the first friction plates each comprise a plate-side fitting portion, that is fitted to the hub-side fitting portion and is formed in a concave or convex shape, on an inner peripheral portion thereof.

2. The torque damper device according to claim 1, wherein the hub-side fitting portion and the plate-side fitting portion are formed so that circumferential lengths at portions in which the fitting portions mesh with each other are different from each other, and a gap is formed that allows relative displacement in a circumferential direction of the output hub and the first friction plates.

3. The torque damper device according to claim 2, wherein the first friction plates are formed in the same shape as each other.

4. The torque damper device according to claim 2, wherein the first friction plates are configured to include a first friction plate including the plate-side fitting portion formed to have the gap different from that of another first friction plate.

5. (amended) The torque damper device according to any one of claims 1 to 4, further comprising:
a flat plate annular second friction plate that is provided between the first input plate and the flange; and
a second intermediate plate that is rotatably driven integrally with the first input plate, formed in a flat plate annular shape, and disposed adjacent to the second friction plate, wherein
the pressure body is provided between the first input plate and the second intermediate plate, so that the second input plate is elastically displaced toward the flange via the first input plate, and the second friction plate is pressed against the flange via the second intermediate plate.

6. (amended) The torque damper device according to claim 5, wherein a plurality of the second friction plates are provided.

7. (amended) The torque damper device according to claim 5 or 6, wherein
the output hub and the flange are configured as separate bodies from each other, and are connected to each other by a rivet penetrating the output hub and the flange,
the rivet has a head projecting from the flange, and a plurality of the rivets are provided in a circumferential direction of the flange, and
the second friction plate is fitted to the head.

8. (amended) The torque damper device according to any one of claims 5 to 7, wherein the flange is formed with a lubricating fluid flow path made of a through-hole for allowing lubricating fluid to flow between both sides of the flange.

9. (amended) The torque damper device according to claim 8, wherein the lubricating fluid flow path is formed at a position facing the friction plate holder.

10. (amended) The torque damper device according to claim 8 or 9, wherein the second friction plate is formed with a flow hole made of a through-hole at a position facing the lubricating fluid flow path.

11. (added) The torque damper device according to any one of claims 5 to 10, wherein
a lubricating oil supply path for supplying lubricating oil into the torque damper device is formed in an input shaft connected to transmit a rotational driving force of the output hub,
a wide width portion that opens radially inward is formed in a gap between at least one of the output hub and the flange, and the first input plate, and
a narrow width portion in which a width of the gap is reduced is formed radially outside the wide width portion.

Statement under Art. 19.1 PCT
1. Amendments
"second friction plates" in claim 5 has been amended.
Claim 6 has defined that a plurality of the "second friction plates" are provided.
Claims 5 to 10 before amendment have been amended to claims 6 to 11.
Claim 11 has been amended to delete "the output hub" in claim 10 before amendment.

The amendments are based on "Written Opinion of the International Search Authority".

Specifically, claim 5 defines that a "second friction plate" is a "flat plate annular body provided between the first input plate and the flange".

Claim 6 defines that a plurality of the "second friction plates" are provided.

Claim 11 clarifies that a "lubricating oil supply path" is provided in an "input shaft" and that a "wide width portion" and a "narrow width portion" are provided between at least one of the "output hub" and the "flange", and the "first input plate".
